# EUROPEAN PATENT APPLICATION

(11) **EP 1 770 135 A1**
(43) Date of publication of application: **04.04.2007**
(21) Application number: 05766338.7
(22) Date of filing: 21.07.2005
(51) Int. Cl.: C09D 201/02, B05D 1/36, B05D 5/06, B05D 7/24, C09D 5/02, C09D 5/29, C09D 7/12, C09D 133/00

(54) **THERMOSETTING WATER-BASED COATING COMPOSITION AND METHOD OF FORMING COATING FILM**

(30) Priority: 22.07.2004 JP 2004213709
(71) Applicant: KANSAI PAINT CO., LTD., Amagasaki-shi, Hyogo 661-8555 (JP)
(72) Inventor: HIWARA, Atsunao, KANSAI PAINT CO., LTD., Hiratsuka-shi, Kanagawa 254-8562 (JP); NARITA, Nobuhiko, KANSAI PAINT CO., LTD., Hiratsuka-shi, Kanagawa 254-8562 (JP)
(74) Representative: Winter, Konrad Theodor
(86) International application number: PCT/JP2005/013416
(87) International publication number: WO 2006/009219

(57) **Abstract**

The present invention provides an thermosetting aqueous coating composition comprising (A) 100 parts by weight of a hydroxy- and carboxy-containing water-soluble resin having a weight average molecular weight of 500 to 200,000, a hydroxy value of 1 to 200 mg KOH/g, and an acid value of 10 to 100 mg KOH/g, and (B) 10 to 100 parts by weight of a luster pigment; the coating composition being applied so as to form a film with a thickness of 3,000 to 8,000 nm when cured; and the coating composition, when formed into a deposited coating with a solids content of 40 wt.%, having a viscosity of 4 x 10² to 1 x 10⁴ mPa·s as measured at 20°C and a shear rate of 0.1 sec⁻¹.

## Description

### TECHNICAL FIELD

The present invention relates to a thermosetting aqueous coating composition and a method of forming a coating film.

### BACKGROUND ART

When a topcoat comprising a one- or two-layer basecoat and a one- or two-layer clear coat is formed on a substrate such as an automobile body by a two-coat one-bake method, three-coat one-bake method or the like, a thermosetting aqueous coating composition is used for forming the basecoat.

Recently, such thermosetting aqueous coating compositions have been required to be capable of forming coating films with high-quality appearance. In particular, when such coating compositions have a silver metallic color, they are required to be capable of forming coating films having both excellent luster and excellent flip-flop property. Flip-flop property means the difference in whiteness (brightness) between a coating surface as seen from the front (highlight) and the coating surface as seen from an oblique angle (shade), the difference being caused by a luster pigment such as aluminum flakes. The greater the difference, the better the flip-flop property.

To obtain a coating film having both excellent luster and excellent flip-flop property, it is necessary for a luster pigment to be dispersed homogeneously in a coating film and be oriented parallel to the coated surface. However, aluminum flakes are oriented in various directions in coating films, and it is difficult to orient all aluminum flakes parallel to the coated surface.

It is generally said that, in an aqueous coating composition, to orient as much luster pigment (such as aluminum flakes) as possible parallel to the coating surface, the viscosity of the deposited coating composition needs to be adjusted to as high as at least 1 x 10⁵ mPa·s, thereby preventing sagging of the resulting coating film.

For example, Japanese Unexamined Patent Application Publication No. 2004-870 discloses that sagging of a coating film and mixing of coating layers can be prevented by a multilayer coating film-forming method comprising the steps of applying an aqueous first colored coating composition and predrying the deposited composition to adjust its viscosity to at least 1 x 10⁶ mPa·s; applying an aqueous second coloring coating composition and adjusting its water content to not more than 10 wt.%; applying a clear coating composition; and simultaneously curing the three coating layers by heating.

In addition, basecoat-forming aqueous metallic coating compositions are used which contain both an emulsion resin and water-soluble resin as resin components, and which have a low viscosity during application but, when deposited, show such a high viscosity as to prevent sagging, based on the structural viscosity achieved by the interaction between emulsion resin particles. For example, Japanese Unexamined Patent Application Publication No. 2001-240791 discloses that when a basecoat-forming aqueous metallic coating composition containing an emulsion-polymerized emulsion resin and water-soluble acrylic resin is used in a two-coat one-bake coating film-forming method, the deposited coating of the composition can be prevented from sagging.

However, merely preventing sagging and the like by increasing the viscosity of the deposited coating composition as described above is insufficient for achieving coating film appearance characteristics, such as high-quality silver metallic colors and like colors with excellent luster and excellent flip-flop property.

Further, in order to obtain a color with high saturation, excellent image sharpness, etc. in a chromatic-color metallic coating film containing a luster pigment and coloring pigment, it is important to uniformly distribute the coloring pigment in the coating film. However, when a large proportion of emulsion resin is used in a metallic coating composition containing both an emulsion resin and water-soluble resin to prevent sagging of the resulting coating film, the coating film contains a large proportion of emulsion resin particles in the continuous phase derived from the water-soluble resin, making it difficult to uniformly distribute the coloring pigment. Therefore, in such a case, there are difficulties in obtaining a good color.

### DISCLOSURE OF THE INVENTION

### PROBLEMS TO BE SOLVED BY THE INVENTION

An object of the present invention is to provide a thermosetting aqueous coating composition that is capable of forming a coating film having excellent luster and excellent flip-flop property when it contains a luster pigment for forming a coating film having a silver metallic color, pearl metallic color or like color; and that is capable of forming a coating film having high saturation, excellent image sharpness and excellent smoothness when it contains a luster pigment and coloring pigment for forming a coating film with a chromatic- and metallic-color coating film.

Another object of the present invention is to provide a method for forming a coating film using such an aqueous coating composition.

### MEANS FOR SOLVING THE PROBLEMS

The present inventors conducted extensive research and found that the above-mentioned objects can be achieved by a thermosetting aqueous coating composition which comprises a specific hydroxy- and carboxy-containing water-soluble resin (A) and a luster pigment (B) and which is applied so as to form a cured thin film having a thickness within a specific range, the coating composition, when formed into a deposited coating, having a viscosity within the range of 4 x 10² to 1 x 10⁴ mPa·s as measured under specific conditions; and a method for forming a coating film using the coating composition. The present invention was accomplished based on these new findings. The present invention provides the following thermosetting aqueous coating compositions and coating film-forming methods.
1. A thermosetting aqueous coating composition comprising:
   (A) 100 parts by weight of a hydroxy- and carboxy-containing water-soluble resin having a weight average molecular weight of 500 to 200,000, a hydroxy value of 1 to 200 mg KOH/g, and an acid value of 10 to 100 mg KOH/g, and
   (B) 10 to 100 parts by weight of a luster pigment; the coating composition being applied so as to form a film with a thickness of 3,000 to 8,000 nm when cured; and the coating composition, when formed into a deposited coating with a solids content of 40 wt.%, having a viscosity of 4 x 10² to 1 x 10⁴ mPa·s as measured at 20°C and a shear rate of 0.1 sec⁻¹.
2. A thermosetting aqueous coating composition according to item 1, further comprising (C) a crosslinking agent.
3. A thermosetting aqueous coating composition according to item 1, further comprising (D) an aqueous emulsion resin.
4. A thermosetting aqueous coating composition according to item 3, wherein the aqueous emulsion resin (D) is an acrylic emulsion resin.
5. A thermosetting aqueous coating composition according to item 1, further comprising (E) a coloring pigment.
6. A method for forming a coating film, the method comprising applying a thermosetting aqueous coating composition according to item 1 to a substrate so as to form a film with a thickness of 3,000 to 8,000 nm when cured.
7. A method according to item 6, the method comprising the steps of:
   (1) applying a thermosetting aqueous coating composition according to item 1 to a substrate so as to form a film with a thickness of 3,000 to 8,000 nm when cured, thereby forming a basecoat;
   (2) applying a clear coating composition to a surface of the uncured basecoat to form a clear coat; and
   (3) simultaneously curing the uncured basecoat and uncured clear coat by heating.
8. A method according to item 6, the method comprising:
   (1) applying an intercoating composition to a substrate to form an intercoat;
   (2) applying a thermosetting aqueous coating composition according to item 1 to a surface of the uncured intercoat so as to form a film with a thickness of 3,000 to 8,000 nm when cured, thereby forming a basecoat;
   (3) applying a clear coating composition to a surface of the uncured basecoat to form a clear coat; and
   (4) simultaneously curing the uncured intercoat, uncured basecoat, and uncured clear coat by heating.
9. An article coated by a method according to item 6.

### Thermosetting aqueous coating composition

The thermosetting aqueous coating composition of the present invention is an aqueous coating composition that comprises a specific proportion of a hydroxy- and carboxy-containing water-soluble resin (A) and luster pigment (B) as essential components, and that is to be applied so as to form a film with a thickness of about 3,000 to about 8,000 nm when cured.

To achieve the above objects, it is necessary that the coating composition of the present invention, when formed into a deposited coating having a solids content of 40 wt.%, have a viscosity of 4 x 10² to 1 x 10⁴ mPa·s as measured at 20°C and a shear rate of 0.1 sec⁻¹.

### Hydroxy- and carboxy-containing water-soluble resin (A)

The hydroxy- and carboxy-containing water-soluble resin (A) is a resin having a weight average molecular weight of about 500 to about 200,000, a hydroxy value of about 1 to about 200 mg KOH/g, and an acid value of about 10 to about 100 mg KOH/g.

Due to the fact that the resin (A) has a weight average molecular weight, hydroxy value and acid value within the above ranges, the coating composition of the present invention, which contains the resin (A), is capable of forming a coating film having excellent film performance in terms of hardness, scratch resistance, weather resistance, smoothness, etc., and the resin is highly stable in the composition.

The weight average molecular weight of the resin (A) is preferably about 2,000 to about 50,000. The hydroxy value thereof is preferably about 30 to about 150 mg KOH/g. The acid value thereof is preferably about 30 to about 70 mg KOH/g.

The type of the water-soluble resin (A) is not limited as long as the resin has a weight average molecular weight, hydroxy value and acid value within the above ranges. Examples of such resins include acrylic resins, polyester resins, urethane-modified polyester resins, epoxy resins, etc., among which acrylic resins, polyester resins, and urethane-modified polyester resins are particularly preferable.

### Acrylic resin

A hydroxy- and carboxy-containing water-soluble acrylic resin usable as the water-soluble resin (A) can be synthesized by copolymerizing radically polymerizable monomers by a standard method such as solution polymerization or the like.

Such radically polymerizable monomers include a hydroxy-containing radically polymerizable monomer and carboxy-containing radically polymerizable monomer as essential monomers, with other radically polymerizable monomers being optionally used. Such monomers may be known monomers.

Examples of hydroxy-containing radically polymerizable monomers include 2-hydroxyethyl (meth)acrylate, hydroxypropyl (meth)acrylate, 4-hydroxybutyl (meth)acrylate, tetrahydrofurfuryl (meth)acrylate, ε-caprolactone-modified tetrahydrofurfuryl (meth)acrylate, ε-caprolactone-modified hydroxyethyl (meth)acrylate, polyethylene glycol mono(meth)acrylate, polypropylene glycol mono(meth)acrylate, 2-hydroxy-3-phenoxypropyl (meth)acrylate, 2-hydroxy-3-butoxypropyl (meth)acrylate, monohydroxyethyl phthalate (meth)acrylate, etc.

Examples of carboxy-containing radically polymerizable monomers include acrylic acid, methacrylic acid, etc.

Examples of other radically polymerizable monomers include styrene, methyl (meth)acrylate, ethyl (meth)acrylate, butyl (meth)acrylate, 2-ethylhexyl (meth)acrylate, lauryl (meth)acrylate, cyclohexyl (meth)acrylate, cyclohexenyl (meth)acrylate, phenoxyethyl (meth)acrylate, phenoxypolyethylene glycol (meth)acrylate, dicyclopentenyl (meth)acrylate, dicyclopentenyloxyethyl (meth)acrylate, isobornyl (meth)acrylate, benzyl (meth)acrylate, N-methylol(meth)acrylamide, N-butoxy(meth)acrylamide, acryloylmorpholine, dimethylaminoethyl (meth)acrylate, N-vinyl-2-pyrrolidone, γ-acryloxypropyltrimethoxysilane, nonylphenolethylene oxide-modified acrylates, etc. A commercial product available under the tradename "Aronix M110" (product of Toagosei Co., Ltd.) can be used as a nonylphenolethylene oxide-modified acrylate.

As used herein, "(meth)acrylate" means "acrylate or methacrylate".

### Polyester resin

A hydroxy- and carboxy-containing water-soluble polyester resin usable as the water-soluble resin (A) can be synthesized by performing an esterification reaction of a polybasic acid with a polyhydric alcohol in a standard manner.

Polybasic acids are compounds having at least two carboxy groups per molecule, and examples thereof include phthalic acid, isophthalic acid, terephthalic acid, succinic acid, adipic acid, azelaic acid, sebacic acid, tetrahydrophthalic acid, hexahydrophthalic acid, hexachloro endomethylene tetrahydrophthalic acid, maleic acid, fumaric acid, itaconic acid, trimellitic acid, anhydrides of such polybasic acids, etc.

Polyhydric alcohols are compounds having two or more hydroxy groups per molecule. Examples thereof include ethylene glycol, propylene glycol, 1,3-propanediol, 1,4-butanediol, 1,5-pentanediol, 1,6-hexanediol, 2,2-diethyl-1,3-propanediol, diethylene glycol, dipropylene glycol, triethylene glycol, neopentyl glycol, 1,9-nonanediol, 1,4-cyclohexanedimethanol, neopentyl glycol hydroxypivalate, 2-butyl-2-ethyl-1,3-propanediol, 3-methyl-1,5-pentanediol, 2,2,4-trimethylpentanediol, hydrogenated bisphenol A, and other diols; trimethylolpropane, trimethylolethane, glycerol, pentaerythritol, and other triols and higher polyols; etc.

Also usable as polyester resins are fatty acid-modified polyester resins modified with fatty acids of (semi)drying oils such as linseed oil fatty acid, coconut oil fatty acid, safflower oil fatty acid, soybean oil fatty acid, sesame oil fatty acid, perilla oil fatty acid, hemp oil fatty acid, tall oil fatty acid, dehydrated castor oil fatty acid, etc. It is usually suitable that the proportion of such modifying fatty acid be not more than 30 wt.% as an oil length.

Further, for example, acid groups may be introduced into a polyester resin by further reacting the product of the esterification reaction of a polybasic acid and a polyhydric alcohol with a polybasic acid or an anhydride thereof, such as trimellitic acid, trimellitic anhydride, or the like.

### Urethane-modified polyester resin

Hydroxy- and carboxy-containing water-soluble urethane-modified polyester resins usable as the water-soluble resin (A) include, for example, resins obtained by urethanization reactions of polyisocyanate compounds with some of the hydroxy groups of hydroxy- and carboxy-containing polyester resins.

Usable hydroxy- and carboxy-containing polyester resins include, for example, polyester resins as mentioned above.

Examples of polyisocyanate compounds include lysine diisocyanate, hexamethylene diisocyanate, trimethylhexane diisocyanate, and other aliphatic diisocyanates; hydrogenated xylylene diisocyanate, isophorone diisocyanate, methylcyclohexane-2,4-diisocyanate, methylcyclohexane-2,6-diisocyanate, 4,4'-methylenebis(cyclohexylisocyanate), 1,3-(isocyanatomethyl)cyclohexane, and other cyclic aliphatic diisocyanates; tolylene diisocyanate, xylylene diisocyanate, diphenylmethane diisocyanate, and other aromatic diisocyanates; lysine triisocyanate, other triisocyanates, and higher polyisocyanates; and other organic polyisocyanates. Usable examples further include adducts of such organic polyisocyanates with polyhydric alcohols, low-molecular-weight polyester resins, water, etc.; cyclopolymers of such organic diisocyanates (e.g., isocyanurates); biuret-type adducts; etc. Such polyisocyanate compounds can be used singly or in combination.

The reaction ratio of such a hydroxy- and carboxy-containing polyester resin to polyisocyanate compound(s) is not limited as long as the urethane-modified polyester resin obtained by the reaction has a hydroxy value of about 1 to about 200 mg KOH/g.

### Luster pigment (B)

The luster pigment (B) is a pigment used to impart brilliant luster, or brilliant luster and interference color, to a coating film formed using the coating composition of the present invention. Known luster pigments can be used, including, for example, aluminum flakes, vapor-deposited aluminum, aluminum oxide, bismuth oxychloride, mica, titanium oxide-coated mica, iron oxide-coated mica, micaceous iron oxide, etc. Among these, aluminum flakes are particularly suitable since they make it possible to form a coating film with particularly excellent luster. Aluminum flakes are divided into leafing aluminum flakes and non-leafing aluminum flakes, with non-leafing aluminum flakes being preferable.

The luster pigment (B) can be mixed with at least one of the resin (A), other resins, hydrophilic organic solvents, antifoaming agents, dispersants, surface control agents, etc., as required, to form a paste.

The coating composition of the present invention may contain, as required, a crosslinking agent (C), aqueous emulsion resin (D), coloring pigment (E), other additives, etc. These optional components are described below.

### Crosslinking agent (C)

The crosslinking agent (C) is a compound that undergoes a crosslinking reaction with hydroxy groups of the component (A). It is preferable to use the crosslinking agent (C) to improve the curability and other properties of the coating composition of the present invention.

The crosslinking agent (C) is not limited, and a blocked polyisocyanate curing agent (C1), water-dispersible blocked polyisocyanate curing agent (C2), melamine resin (C3), etc. are preferable.

Blocked polyisocyanate curing agent (C1): a curing agent obtained by blocking, with a blocking agent, isocyanate groups of a polyisocyanate compound having at least two free isocyanate groups per molecule.

Usable polyisocyanate compounds include, for example, hexamethylene diisocyanate, trimethylhexamethylene diisocyanate, dimer acid diisocyanate, lysine diisocyanate, and other aliphatic diisocyanates; biuret-type adducts and isocyanurate ring-type adducts of such aliphatic diisocyanates; isophorone diisocyanate, 4,4'-methylenebis(cyclohexylisocyanate), methylcyclohexane-2,4-diisocyanate, methylcyclohexane-2,6-diisocyanate, 1,3-di(isocyanatomethyl)cyclohexane, 1,4-di(isocyanatomethyl)cyclohexane, 1,4-cyclohexane diisocyanate, 1,3-cyclopentane diisocyanate, 1,2-cyclohexane diisocyanate, 4,4'-dicyclohexylmethane diisocyanate (hydrogenated MDI), and other alicyclic diisocyanates; biuret-type adducts and isocyanurate ring-type adducts of such alicyclic diisocyanates; xylylene diisocyanate, tetramethylxylylene diisocyanate, tolylene diisocyanate, 4,4'-diphenylmethane diisocyanate (MDI), 1,5-naphthalene diisocyanate, 1,4-naphthalene diisocyanate, 4,4'-toluidine diisocyanate, 4,4'-diphenylether diisocyanate, m-phenylene diisocyanate, p-phenylene diisocyanate, 4,4'-biphenylene diisocyanate, 3,3'-dimethyl-4,4'-biphenylene diisocyanate, bis(4-isocyanatophenyl)sulfone, isopropylidenebis(4-phenylisocyanate), and other aromatic diisocyanate compounds; biuret-type adducts and isocyanurate ring-type adducts of such aromatic diisocyanates; triphenylmethane-4,4',4"-triisocyanate, 1, 3, 5-triisocyanate benzene, 2,4,6-triisocyanate toluene, 4,4'-dimethyldiphenylmethane-2,2',5,5'-tetraisocyanate, and other polyisocyanates having at least three isocyanate groups per molecule; biuret-type adducts and isocyanurate ring-type adducts of such polyisocyanates; urethanized adducts obtained by reacting polyisocyanates with hydroxy groups of polyols such as ethylene glycol, propylene glycol, 1,4-butylene glycol, dimethylolpropionic acid, polyalkylene glycol, trimethylolpropane, hexanetriol, etc., in such a ratio that isocyanate groups are in excess; biuret-type adducts and isocyanurate ring-type adducts of such urethanized adducts; etc.

The blocking agent blocks free isocyanate groups, and when a blocked polyisocyanate curing agent blocked with such a blocking agent is heated at, for example, a temperature not lower than 100°C, and preferably not lower than 130°C, the blocking agent dissociates so that isocyanate groups are regenerated and can readily react with hydroxy groups.

Examples of such blocking agents include phenol, cresol, xylenol, nitrophenol, ethylphenol, hydroxydiphenyl, butylphenol, isopropylphenol, nonylphenol, octylphenol, methyl hydroxybenzoate, and other phenolic compounds; ε-caprolactam, δ-valerolactam, γ-butyrolactam, β-propiolactam, and other lactam compounds; methanol, ethanol, propyl alcohol, butyl alcohol, amyl alcohol, lauryl alcohol, and other aliphatic alcohol compounds; ethylene glycol monomethyl ether, ethylene glycol monoethyl ether, ethylene glycol monobutyl ether, diethylene glycol monomethyl ether, diethylene glycol monoethyl ether, propylene glycol monomethyl ether, methoxymethanol, and other ether compounds; benzyl alcohol; glycolic acid; methyl glycolate, ethyl glycolate, butyl glycolate, and other glycolates; lactic acid; methyl lactate, ethyl lactate, butyl lactate, and other lactates; methylolmelamine, diacetone alcohol, 2-hydroxyethyl acrylate, 2-hydroxyethyl methacrylate, and other alcohol compounds than the above-mentioned aliphatic alcohol compounds; formamide oxime, acetamide oxime, acetoxime, methyl ethyl ketoxime, diacetylmonoxime, benzophenone oxime, cyclohexane oxime, and other oxime compounds; dimethyl malonate, diethyl malonate, diisopropyl malonate, di-n-butyl malonate, diethyl methyl malonate, benzyl methyl malonate, diphenyl malonate, and other dialkyl malonates; methyl acetoacetate, ethyl acetoacetate, isopropyl acetoacetate, n-propyl acetoacetate, benzyl acetoacetate, phenyl acetoacetate, and other acetoacetates; acetylacetone and other active methylene compounds; butyl mercaptan, t-butyl mercaptan, hexyl mercaptan, t-dodecyl mercaptan, 2-mercaptobenzothiazole, thiophenol, methylthiophenol, ethylthiophenol, and other mercaptan compounds; acetanilide, acetanisidide, acetotoluide, acrylamide, methacrylamide, acetamide, stearamide, benzamide, and other acid amide compounds; succinimide, phthalimide, maleimide, and other imide compounds; diphenylamine, phenylnaphthylamine, xylidine, N-phenylxylidine, carbazole, aniline, naphthylamine, butylamine, dibutylamine, butylphenylamine, and other amine compounds; imidazole, 2-ethylimidazole, and other imidazole compounds; 3,5-dimethylpyrazole and other pyrazole compounds; urea, thiourea, ethyleneurea, ethylene tiourea, diphenylurea, methylolurea, and other urea compounds; phenyl N-phenylcarbamate and other carbamate compounds; ethyleneimine, propyleneimine, and other imine compounds; sodium bisulfite, potassium bisulfite, and other sulfite compounds; etc.

Water-dispersible blocked polyisocyanate curing agent (C2): a blocked polyisocyanate curing agent obtained by imparting water dispersibility to the blocked polyisocyanate curing agent (C1) in such a degree that the performance of the resulting coating film is not impaired, so that the amount of organic solvent is reduced to achieve low VOC level.

The water-dispersible blocked polyisocyanate curing agent (C2) is obtained by blocking isocyanate groups of a polyisocyanate compound with hydroxymonocarboxylic acid and a blocking agent and then neutralizing the carboxy group of the hydroxymonocarboxylic acid to impart water dispersibility.

Usable polyisocyanate compounds include those mentioned above for use in the blocked polyisocyanate curing agent (C1). Among these, hexamethylene diisocyanate (HMDI), derivatives of hexamethylene diisocyanate (HMDI), isophorone diisocyanate (IPDI), derivatives of isophorone diisocyanate (IPDI), hydrogenated MDI, and derivatives of hydrogenated MDI, etc. are preferable.

The water-dispersible blocked polyisocyanate curing agent (C2) is produced by reacting isocyanate groups of a polyisocyanate compound with a hydroxymonocarboxylic acid while blocking the isocyanate groups with a blocking agent. The reaction is performed so that at least one isocyanate group of the polyisocyanate compound is added to the hydroxyl group(s) of the hydroxymonocarboxylic acid.

Usable blocking agents include those mentioned above for preparation of the blocked polyisocyanate curing agent (C1). Hydroxymonocarboxylic acids include, for example, 2-hydroxyacetic acid, 3-hydroxypropanoic acid, 12-hydroxy-9-octadecanoic acid (ricinoleic acid), 3-hydroxy-2,2-dimethylpropanoic acid (hydroxypivalic acid), 2-2-dimethylolpropionic acid (DMPA), etc., with 3-hydroxy-2,2-dimethylpropanoic acid (hydroxypivalic acid) being especially preferable. The solvent used for the reaction of a hydroxymonocarboxylic acid is preferably not reactive with isocyanate groups. Examples of such solvents include acetone, methyl ethyl ketone, and other ketones; ethyl acetate and other esters; N-methylpyrrolidone (NMP), etc.

Melamine resin (C3): Specific examples of the melamine resin (C3) include dimethylolmelamine, trimethylolmelamine, tetramethylolmelamine, pentamethylolmelamine, hexamethylolmelamine, and other methylolmelamines; alkyl ethers of methylolmelamines; condensates of methylolmelamines and alkyl ethers of methylolmelamines; etc. Examples of alkyl groups in alkyl ethers of methylolmelamines include methyl, ethyl, propyl, isopropyl, butyl, isobutyl, 2-ethylhexyl, and other C₁₋₈ alkyl groups.

Commercial products of melamine resin (C3) include, for example, the Cymel series of Mitsui Cytec Industries, such as "Cymel 254"; the U-Van series of Mitsui Chemicals, Inc., such as "U-Van 20SB"; etc.

When the melamine resin (C3) is used as a crosslinking agent, para-toluenesulfonic acid, dodecylbenzenesulfonic acid, dinonylnaphthalenesulfonic acid or like sulfonic acid; a salt of such a sulfonic acid with an amine; or the like can be used as a catalyst.

### Aqueous emulsion resin (D)

The aqueous emulsion resin (D), which can be optionally used in the coating composition of the present invention, is not limited, and an acrylic emulsion resin (D1), urethane emulsion resin (D2), etc. that are conventionally used in aqueous resin compositions are usable.

Examples of the acrylic emulsion resin (D1) include acrylic emulsion resins obtained by performing emulsion polymerization of vinyl monomers including acrylic monomers, in the presence of dispersion stabilizers such as surfactants, using radical polymerization initiators.

The acrylic emulsion resin (D1) may have an ordinary homogeneous structure, or a multilayer structure such as a core/shell structure. Further, the resin particles may be internally crosslinked or uncrosslinked. In a core/shell structure, the core and/or shell may be crosslinked or uncrosslinked. For example, such a structure may consist of a core that is crosslinked within the resin particles, and a shell that is not crosslinked within the resin particles.

Vinyl monomers subjected to emulsion polymerization are preferably selected from, for example, a carboxy-containing vinyl monomer (M-1), hydroxy-containing vinyl monomer (M-2), and other vinyl monomer (M-3). Further, such vinyl monomers may be used in combination with small amount(s) of (i) a polyvinyl compound (M-4) having at least two polymerizable unsaturated bonds per molecule; (ii) a glycidyl-containing vinyl monomer and a carboxy-containing vinyl monomer (M-1); (iii) a hydroxy-containing vinyl monomer (M-2) and an isocyanate-containing vinyl monomer; to thereby intramolecularly crosslink the resin particles of the resulting acrylic emulsion resin.

An acrylic emulsion resin (D1) having a core/shell structure can be obtained by, for example, first emulsion-polymerizing a vinyl monomer component that is entirely or substantially free of carboxy-containing vinyl monomer (M-1), thereby forming a core, and then adding a vinyl monomer component containing a large amount of carboxy-containing vinyl monomer (M-1) to perform emulsion polymerization, thereby forming a shell.

An acrylic emulsion resin (D1) having a core/shell structure with a crosslinked core can be obtained by, for example, first emulsion-polymerizing a vinyl monomer component that contains a small amount of the polyvinyl compound (M-4) and that is entirely or substantially free of the carboxy-containing vinyl monomer (M-1), thereby forming a core, and then adding a vinyl monomer component containing a large amount of the carboxy-containing vinyl monomer (M-1) to perform emulsion polymerization, thereby forming a shell.

The shell can be bonded to the core, for example, in the following manner: when forming the core, a polymerizable unsaturated bond is caused to be present on the surface of the core, or a functional group for introducing a polymerizable unsaturated bond is caused to be present on the surface of the core, and introducing a polymerizable unsaturated bond via this functional group; and the shell is then formed by copolymerizing a vinyl monomer component containing the carboxy-containing vinyl monomer (M-1).

The carboxy-containing vinyl monomer (M-1) encompasses compounds having at least one carboxy group and one polymerizable unsaturated bond per molecule. Examples of such compounds include acrylic acid, methacrylic acid, crotonic acid, and other monocarboxylic acids; maleic acid, itaconic acid, and other dicarboxylic acids; etc. Monomer (M-1) also encompasses dicarboxylic anhydrides, monocarboxylic acids, i.e., dicarboxylic acid half esters, etc.

The hydroxy-containing vinyl monomer (M-2) encompasses compounds having one hydroxy group and one polymerizable unsaturated bond per molecule. The hydroxy group functions as a crosslinkable functional group of the resulting acrylic emulsion resin. Specifically, monoesters of acrylic acid and methacrylic acid with C₂₋₁₀ dihydric alcohols are preferable as the monomer (M-2). Examples of the monomer (M-2) include 2-hydroxyethyl acrylate, 2-hydroxyethyl methacrylate, hydroxypropyl acrylate, hydroxypropyl methacrylate, hydroxybutyl acrylate, hydroxybutyl methacrylate, etc.

The other vinyl monomer (M-3) encompasses monomers that are different from the monomers (M-1) and (M-2) and that have one polymerizable unsaturated bond per molecule. Specific examples include the following (1) to (8).
(1) monoesters of acrylic acid and methacrylic acid with C₁₋₂₀ monohydric alcohols: for example, methyl acrylate, methyl methacrylate, ethyl acrylate, ethyl methacrylate, propyl acrylate, propyl methacrylate, butyl acrylate, butyl methacrylate, 2-ethylhexyl acrylate, 2-ethylhexyl methacrylate, cyclohexyl acrylate, cyclohexyl methacrylate, lauryl acrylate, lauryl methacrylate, etc.
(2) Aromatic vinyl monomers: for example, styrene, α-methylstyrene, vinyltoluene, etc.
(3) Glycidyl-containing vinyl monomers: compounds having one glycidyl group and one polymerizable unsaturated bond per molecule; specific examples thereof include glycidyl acrylate, glycidyl methacrylate, etc.
(4) Nitrogen-containing alkyl (C₁₋₂₀) acrylates: for example, dimethylaminoethyl acrylate, dimethylaminoethyl methacrylate, etc.
(5) Polymerizable unsaturated bond-containing amide compounds: for example, acrylamide, methacrylamide, dimethylacrylamide, N,N-dimethylpropylacrylamide, N-butoxymethylacrylamide, N-methylolacrylamide, N-methylolmethacrylamide, diacetoneacrylamide, etc.
(6) Vinyl compounds: for example, vinyl acetate, vinyl propionate, vinyl chloride, etc.
(7) Polymerizable unsaturated bond-containing nitrile compounds: for example, acrylonitrile, methacrylonitrile, etc.
(8) Diene compounds: for example, butadiene, isoprene, etc.

Such other vinyl monomers (M-3) can be used singly or in combination.

Examples of the polyvinyl compound (M-4) include ethylene glycol diacrylate, ethylene glycol dimethacrylate, triethylene glycol diacrylate, tetraethylene glycol dimethacrylate, 1,6-hexanediol diacrylate, allyl methacrylate, allyl acrylate, divinylbenzene, trimethylolpropane triacrylate, etc. The above-mentioned diene compounds are not included.

Dispersion stabilizers usable for emulsion polymerization include, for example, anionic surfactants, nonionic surfactants, amphoteric surfactants, etc. Specific examples of anionic surfactants include fatty acids, alkyl sulfate salts, alkylbenzene sulfonates, alkyl phosphates, etc. Examples of nonionic surfactants include polyoxyethylene alkyl ethers, polyoxyethylene alkylaryl ethers, polyoxyethylene derivatives, sorbitan fatty acid esters, polyoxyethylene sorbitan fatty acid esters, polyoxyethylene alkylamines, alkyl alkanolamides, etc. Examples of amphoteric surfactants include alkylbetaines, and the like.

The amount of surfactant is usually about 0.1 to about 10 wt.%, and preferably about 1 to about 5 wt.%, based on the total weight of the monomers used for the polymerization.

Examples of usable radical polymerization initiators include ammonium persulfate, 4,4'-azobis(4-cyanobutanoic acid), etc. The amount of such initiator is usually 0.01 to 10 wt.%, and preferably 0.1 to 5 wt.%, based on the total weight of the monomers used for the polymerization.

The reaction temperature of the emulsion polymerization is usually about 60 to about 90°C, and the reaction time is usually about 5 to about 10 hours.

From the viewpoint of improvement of water resistance, curability, etc. of the resulting coating film, the obtained acrylic emulsion resin (D1) preferably has a hydroxy value of about 1 to about 100 mg KOH/g, and more preferably about 5 to about 80 mg KOH/g. From the same viewpoint as above, the acrylic emulsion resin (D1) preferably has an acid value of about 1 to about 100 mg KOH/g, and more preferably about 5 to about 80 mg KOH/g. The resin particles of the acrylic emulsion resin (D1) may have a particle diameter of about 10 to about 1,000 nm, and preferably about 20 to about 500 nm.

The acrylic emulsion resin (D1) is preferably neutralized with a basic compound. Examples of basic compounds include ammonia, water-soluble amino compounds, etc. Examples of water-soluble amino compounds include monoethanolamine, ethylamine, dimethylamine, diethylamine, triethylamine, propylamine, dipropylamino, isopropylamine, diisopropylamine, triethanolamine, butylamine, dibutylamine, 2-ethylhexylamine, ethylenediamine, propylenediamine, methylethanolamine, dimethylethanolamine, diethylethanolamine, 2-amino-2-methylpropanol, diethanolamine, morpholine, etc.

The urethane emulsion resin (D2) is a resin that is frequently used in the paint industry to improve stress relaxation properties and like properties of coating films. For example, when such a resin is used in a coating film for an automobile body, it has the effect of improving the resistance of the coating film against damage caused by stone chipping (chipping resistance) during travel of the automobile.

The urethane emulsion resin (D2) can be prepared, for example, by dispersing or dissolving in water a hydrophilic group-containing urethane polymer obtained by reacting an active hydrogen-containing compound, a compound having active hydrogen and hydrophilic group(s) in its molecule, and an organic polyisocyanate compound.

Examples of active hydrogen-containing compounds include high molecular weight polyols, low molecular weight polyols, and polyamines.

High molecular weight polyols include, for example, polyether polyols, polyester polyols, polycarbonate polyols, etc. Such high molecular weight polyols usually have a hydroxy equivalent of 200 to 3,000, and preferably 250 to 2,000.

Low molecular weight polyols include, for example, 1,4-butanediol, 3-methylpentanediol, pentaerythritol, trimethylolpropane, etc.

Preferable examples of polyamines include hexamethylenediamine, isophoronediamine, N-hydroxyethylethylenediamine, 4,4'-diaminocyclohexylmethane, etc.

Preferable examples of compounds having active hydrogen and hydrophilic group(s) in their molecules include compounds containing active hydrogen and anionic group(s) or anion-forming group(s). Such compounds include, for example, α,α'-dimethylolpropionic acid, α,α'-dimethylolbutyric acid, and other dihydroxycarboxylic acids; sodium 3-(2,3-dihydroxypropoxy)-1-propanesulfonate and other dihydroxysulfonic acids; diaminobenzoic acid and other diaminocarboxylic acids, etc.

Examples of organic polyisocyanate compounds include isophorone diisocyanate (IPDI), hexamethylene diisocyanate (HDI), 4,4'-dicyclohexylmethane diisocyanate (hydrogenated MDI), 2,4-tolylene diisocyanate (TDI), 2,6-tolylene diisocyanate (TDI), 4,4'-diphenylmethane diisocyanate (MDI), α,α,α',α'-tetramethylxylylene diisocyanate (TMXDI), etc.

In the production of a hydrophilic group-containing urethane polymer, the reaction of an active hydrogen-containing compound, compound having active hydrogen and hydrophilic group(s) in its molecule, and an organic polyisocyanate compound is performed by, for example, a one-shot process in which the components are reacted at one time; a multi-stage process in which part of the active hydrogen-containing compound is reacted with the compound having active hydrogen and hydrophilic group(s) in its molecule and the organic polyisocyanate compound, to form an isocyanate terminal prepolymer, which is then reacted with the remainder of the active hydrogen-containing compound; or like process.

The above reaction is usually carried out at about 40 to about 140°C, and preferably about 60 to about 120°C. The reaction may be performed in an organic solvent that is inert to isocyanate groups, and such an organic solvent can be added during or after the reaction. Usable organic solvents include acetone, toluene, dimethylformamide, etc.

The urethane emulsion resin (D2) can be obtained by neutralizing a hydrophilic group-containing urethane polymer as obtained above, with a basic compound to form anionic groups, and then dispersing or dissolving the polymer in water. Usable basic compounds include, for example, triethylamine, trimethylamine, and like organic bases; sodium hydroxide, potassium hydroxide, and like inorganic bases; etc.

When dispersing or dissolving the urethane polymer in water, an anionic surfactant and/or nonionic surfactant can also be used if necessary.

### Coloring pigment (E)

The coating composition of the present invention may contain a conventional coloring pigment (E) for use in automobile paints or the like, in such an amount that does not impair the luster of the coating film. This makes it possible to obtain a chromatic-color metallic coating film having excellent image sharpness and high saturation and having low turbidity.

Examples of coloring pigments include titanium oxide, zinc oxide, carbon black, cadmium red, molybdenum red, chrome yellow, chrome oxide, Prussian blue, cobalt blue, and other inorganic pigments; and azo pigments, phthalocyanine pigments, quinacridone pigments, isoindoline pigments, vat pigments, perylene pigments, and other organic pigments.

The coloring pigment (E) can be mixed with the resin (A), other resins, hydrophilic organic solvents, antifoaming agents, dispersants, surface control agents, etc. as required, to form a paste.

### Other components

The coating composition of the present invention may contain, as required, dyes, extender pigments, thickeners, curing catalysts, ultraviolet ray absorbents, light stabilizers, surface control agents, degradation inhibitors, rheology control agent, precipitation inhibitors, antifoaming agents, etc.

Examples of dyes include azo dyes, anthraquinone dyes, indigoid dyes, carbonium dyes, quinonimine dyes, phthalocyanine dyes, etc.

Such dyes can be mixed with the resin (A), other resins, hydrophilic organic solvents, antifoaming agents, dispersants, surface control agents, etc. as required, to form a paste.

Examples of extender pigments include talc, clay, kaolin, baryta, barium sulfate, barium carbonate, calcium carbonate, silica, alumina white, etc.

Usable thickeners include, for example, known thickeners for aqueous paints.

### Preparation and formulation of coating composition

The coating composition of the present invention can be prepared, for example, by the following method.

First, the hydroxy- and carboxy-containing water-soluble resin (A) is neutralized and dissolved in an aqueous medium containing about 0.3 to about 1.2 equivalents, and preferably about 0.5 to about 1.0 equivalents, of basic compound per carboxyl group, to thereby give an aqueous resin composition.

Examples of usable basic compounds include hydroxides of alkali metals, ammonia, and other inorganic basic compounds; methylamine, dimethylamine, trimethylamine, ethylamine, diethylamine, triethylamine, isopropylamine, diisopropylamine, diethylenetriamine, triethylenetetramine, monoethanolamine, diethanolamine, 2-amino-2-methylpropanol, morpholine, N-methylmorpholine, N-ethylmorpholine, piperazine, dimethylethanolamine, diethylethanolamine, dimethyldodecylamine, and other amine compounds; etc. Among these, triethylamine, dimethylethanolamine, and diethylethanolamine are particularly preferable.

Examples of usable aqueous media include water and hydrophilic organic solvents. Examples of hydrophilic organic solvents include ethanol, isopropanol, furfuryl alcohol, ethylene glycol, hexylene glycol, and other alcohol solvents; methyl ethyl ketone, acetonylacetone, aminomethyl ketone, diacetone alcohol, and other ketone solvents; 3-methoxy-3-methyl-1-butanol, ethylene glycol monobutyl ether, dipropylene glycol monomethyl ether, diethylene glycol diethyl ether, diethylene glycol monomethyl ether, diethylene glycol monoethyl ether, and other ether solvents; methyl cellosolve, ethyl cellosolve, butyl cellosolve, and other cellosolve solvents; ethylene glycol monomethyl ether acetate, ethyl lactate, ethylene glycol monoethyl ether acetate, n-butyl lactate, diethylene glycol monomethyl ether acetate, and other ester solvents; etc.

Subsequently, the luster pigment (B), and optionally the crosslinking agent (C), aqueous emulsion resin (D), coloring pigment (E), etc. are added and dispersed into the aqueous resin composition, to thereby give the coating composition of the present invention.

In order to form a coating film with excellent luster, it is suitable to use the luster pigment (B) in an amount of about 10 to about 100 parts by weight per 100 parts by weight of solids of the hydroxy- and carboxy-containing water-soluble resin (A). The amount of the pigment (B) is preferably about 20 to about 80 parts by weight per 100 parts by weight of solids of resin (A).

When using crosslinking agent (C), to improve the curability and coating film performance of the coating composition, the amount thereof is, on a solids basis, preferably about 5 to about 70 parts by weight, and more preferably about 10 to about 60 parts by weight, per 100 parts by weight of solids of the resin (A).

When using the aqueous emulsion resin (D), the amount thereof is such that the luster and flip-flop property of the coating film are not impaired. Specifically, the amount of the resin (D) is, on a solids basis, preferably about 1 to about 30 parts by weight, and more preferably about 1 to about 20 parts by weight, per 100 parts by weight of solids of the hydroxy- and carboxy-containing water-soluble resin (A).

When using coloring agent (E), the amount thereof is, on a solids basis, preferably about 5 to about 50 parts by weight, and more preferably about 10 to about 30 parts by weight, per 100 parts by weight of solids of resin (A).

It is usually preferable that the coating composition of the present invention have a solids content of about 15 to about 35 wt.%.

Further, the viscosity of the coating composition of the present invention, which is applied in such a manner that the resulting cured film has a thickness of about 3,000 to about 8,000 nm, is adjusted so that a deposited coating of the coating composition has a viscosity of 4 x 10² to 1 x 10⁴ mPa·s as measured at 20°C and a shear rate of 0.1 sec⁻¹, when the deposited coating has a solids content of 40 wt.%.

The viscosity can be adjusted by suitably selecting the molecular weight and acid value of the hydroxy- and carboxy-containing water-soluble resin (A), the proportions of the components, the pH of the coating composition, etc., so that the deposited coating has a viscosity within the above range. If necessary, thickener(s) can be added to adjust the viscosity.

### Coating film-forming method

The coating composition of the present invention is capable of forming a metallic coating film having excellent appearance by being applied to various substrates.

### Substrate

The substrate to be coated with the coating composition of the present invention is not limited. Preferable substrates are, for example, bodies of automobiles, motorcycles, etc. Other usable substrates includes materials that are used to form such bodies, such as cold rolled sheet steels, galvanized steel sheets, zinc alloy-plated steel sheets, stainless steel sheets, tinned steel sheets, other steel sheets, aluminum sheets, aluminum alloy sheets, and other metal substrates; various plastic materials; etc.

The substrate may be a body or metal substrate such as those mentioned above whose metal surface has been subjected to a surface treatment such as phosphate treatment, chromate treatment, composite oxide treatment, or the like. Further, the substrate may be a body, metal substrate or the like as mentioned above which has an undercoat of any of various electrodeposition coating compositions, and/or an intercoat.

### Coating method

The method of applying the coating composition of the present invention is not limited, and may be, for example, air spray coating, airless spray coating, rotary atomization coating, curtain coating, or the like. A wet coating can be formed by such a coating method. Among these, particularly preferable are air spray coating and the like. When applying the coating composition, static electricity can be applied as required.

The amount of the coating composition of the present invention to be applied is such that the composition forms a coating film with a thickness of about 3,000 nm to about 8,000 nm when cured. The amount is preferably such that the composition forms a coating film with a thickness of about 3,000 nm to about 6,000 nm when cured.

Further, the viscosity of the coating composition is adjusted so that when a deposited coating formed by applying the coating composition to a substrate has a solids content of 40 wt.%, the deposited coating has a viscosity of 4 x 10² to 1 x 10⁴ mPa·s, as measured at a temperature of 20°C and a shear rate of 0.1 sec⁻¹.

The above deposited coating viscosity is determined as follows. A coating composition is applied by spraying to a tinplate substrate and allowed to stand for 1 minute, and the deposited coating is collected. The solids content of the deposited coating, and the viscosity thereof at 20°C and a shear rate of 0.1 sec⁻¹ are measured. Similarly, the solids contents and viscosities of deposited coatings formed as above except that the coating composition is allowed to stand for 2, 5 or 10 minutes, are measured. The measured solids contents by weight and viscosities are plotted on the abscissa and ordinate, respectively, to draw a graph using a function obtained by the least squares method. The viscosity of a deposited coating having a solids content of 40 wt.% is read from the graph.

Although the viscosity of the deposited coating varies according to the coating conditions such as the temperature, humidity, etc., it can usually be adjusted within the above range, for example, by suitably adjusting the viscosity of the coating composition with an organic solvent and/or water so that the viscosity of the coating composition at the time of application becomes about 50 to about 400 cP, and preferably about 100 to 200 cP, as measured using a Brookfield viscometer at 20°C and 60 rpm.

The deposited coating on the substrate can be cured by heating. Heating can be performed by a known heating method using, for example, a drying furnace such as a hot air furnace, electric furnace, infrared ray-induced heating furnace, or the like. The heating temperature is preferably about 80 to about 180°C, and more preferably about 100 to about 160°C. The heating time is not limited, and is usually about 20 to about 40 minutes.

The coating composition of the present invention can be advantageously used for forming a basecoat when a topcoat comprising a basecoat and clear coat is formed on a substrate such as an automobile body by a two-coat one-bake method. In this case, the following coating film-forming methods I and II are preferable.

### Method I

A coating film-forming method comprising the steps of
(1) applying the thermosetting aqueous coating composition of the present invention to a substrate in such a manner that the composition forms a coating film with a thickness of about 3,000 to about 8,000 nm when cured, to form a basecoat;
(2) applying a clear coating composition to a surface of the uncured basecoat to form a clear coat; and
(3) simultaneously curing the uncured basecoat and uncured clear coat by heating.

The substrate used in Method I is preferably an automobile body having an undercoat and/or intercoat formed thereon. In Method I, the clear coating composition is applied to a thickness of about 20 to about 60 µm (when cured). It is usually preferable to cure the two-layer coating consisting of uncured basecoat and uncured clear coat by heating at about 120 to about 160°C for about 20 to about 40 minutes.

### Method II

A coating film-forming method comprising the steps of
(1) applying an intercoating composition to a substrate to form an intercoat,
(2) applying the thermosetting aqueous coating composition of the present invention to a surface of the uncured intercoat to a thickness of about 3,000 to about 8,000 nm (when cured) to form a basecoat;
(3) applying a clear coating composition to a surface of the uncured basecoat to form a clear coat; and
(4) simultaneously curing the uncured intercoat, uncured basecoat, and uncured clear coat by heating.

In Method II, a coating film is formed by Method I over an uncured intercoat. The substrate used in Method II is preferably an automobile body having an undercoat formed thereon.

In Method II, it is usually preferable to apply the intercoating composition to a thickness of about 15 to about 40 µm (when cured). The clear coating composition is preferably applied to a thickness of 20 to about 50 µm (when cured). Further, the three-layer coating consisting of uncured intercoat, uncured basecoat and uncured clear coat is preferably cured by heating at about 120 to about 160°C for about 20 to about 40 minutes.

Any of known thermosetting clear coating compositions can be used as the clear coating composition in Methods I and II. For example, a thermosetting coating composition containing a crosslinkable functional group-containing base resin and crosslinking agent can be advantageously used.

Examples of crosslinkable functional groups of the base resin include carboxy, hydroxy, epoxy, alkoxysilyl, etc. Examples of types of base resins include acrylic resins, polyester resins, alkyd resins, urethane resins, silicon resins, fluororesins, etc. Examples of crosslinking agents include polyisocyanate compounds, blocked polyisocyanate compounds, melamine resins, polycarboxylic acids, acid anhydrides, reactive silane compounds, epoxy-containing resins, epoxy compounds, etc. Usable melamine resins, polyisocyanate compounds, and blocked polyisocyanate compounds include those mentioned above with respect to the crosslinking agent (C).

The clear coating composition may be any of organic solvent-based coating compositions, aqueous coating compositions and powder coating compositions.

Preferable combinations of base resin/crosslinking agent in the clear coating composition include acrylic resin/melamine resin, acrylic resin/polyisocyanate compound, acrylic resin/blocked polyisocyanate compound, acid group-containing resin/epoxy-containing resin, etc.

Any of known thermosetting intercoating compositions can be used as the intercoating composition in Method II. For example, a thermosetting coating composition containing a crosslinkable functional group-containing base resin, crosslinking agent, and coloring pigment can be advantageously used.

Examples of crosslinkable functional groups of the base resin include carboxy, hydroxy, epoxy, and like groups. Examples of types of base resins include acrylic resins, polyester resins, alkyd resins, urethane resins, etc. Usable crosslinking agents include, for example, melamine resins, polyisocyanate compounds, blocked polyisocyanate compounds, etc. Usable melamine resins, polyisocyanate compounds, and blocked polyisocyanate compounds include those mentioned above with respect to the crosslinking agent (C). Usable coloring pigments include those mentioned above as the coloring pigment (E).

The intercoating composition may be any of organic solvent-based coating compositions, aqueous coating compositions, and powder coating compositions.

In Methods I and II, the intercoating composition and clear coating composition, after being adjusted with an organic solvent and/or water to have a suitable application viscosity, can be applied by known methods such as air spraying, airless spraying, and the like.

### EFFECTS OF THE INVENTION

The thermosetting aqueous coating composition of the present invention and the coating film-forming method using the composition achieve the following remarkable effects.
(1) It is possible to obtain excellent luster and excellent flip-flop property in a coating film with a silver metallic color, pearl metallic color, or like color, the coating film being obtained by using a luster pigment.
   Using the thermosetting aqueous coating composition of the present invention, the luster pigment is likely to orient parallel to the coated surface, due to the fact that a deposited coating obtained by applying the coating composition to a substrate to a specific thickness has a viscosity of 4 x 10² to 1 x 10⁴ mPa·s when the deposited coating has a solids content of 40 wt.%. Therefore, for example, when a silver metallic-color coating film is formed using aluminum flakes as a luster pigment, the obtained coating film is dense and has excellent luster and excellent flip-flop property. Further, when a pearl metallic-color coating film is formed using mica as a luster pigment, the obtained coating film has excellent luster and excellent flip-flop property, and has a strong interference color when viewed from the front.
   The above effects can be achieved by thin coating application, presumably because the coating composition can be discharged in a small amount and therefore be finely atomized when being applied; and presumably because the coating composition particles receive a strong impact force during deposition due to the thinness of the deposited wet coating, the strong impact force making the luster pigment be likely to be oriented parallel to the coated surface.
   Further, since thin coating application promotes vaporization of volatile components from the deposited composition and thereby increases the solids content of the deposited composition, the good orientation of the luster pigment achieved by the strong impact force is retained without being disturbed by flow of the deposited coating composition. This also improves the luster and flip-flop property of the resulting luster pigment-containing coating film.
   Furthermore, the coating film has improved smoothness due to the above-specified viscosity of the deposited thin coating, making it possible to obtain a coating film in which a luster pigment is favorably oriented and which has excellent finish properties such as surface smoothness, image sharpness, etc.
(2) When a chromatic- and metallic-color coating film is formed using a luster pigment and coloring pigment, the coating film has only slight turbidity, and has high saturation, excellent image sharpness, and excellent smoothness.

### BRIEF DESCRIPTION OF THE DRAWINGS

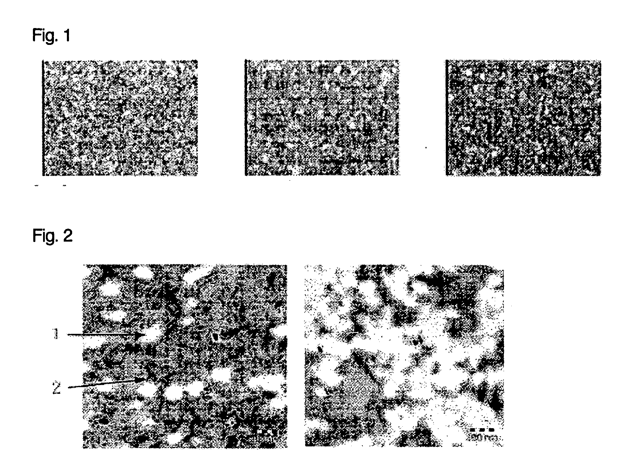

[Fig. 1] Fig. 1 is a set of photographs of the coating surfaces obtained by two-coat one-bake methods in Example 5, Comparative Example 10 and Comparative Example 11, the photographs being taken through a reflecting optical microscope at a magnification of 100 times. The photographs in Fig. 1 show, from the left, the coating surface obtained in Example 5, that obtained in Comparative Example 10, and that obtained in Comparative Example 11. In each photograph, the brightest white particles are mica pigment particles.
[Fig. 2] Fig. 2 is a set of photographs of thin pieces obtained by vertically cutting the coating films obtained by two-coat one-bake methods in Example 5 and Comparative Example 10, the photographs being taken through a transmission electron microscope at a magnification of 50,000 times. In Fig. 2, the left photograph shows the coating film of Example 5, and the right photograph shows that of Comparative Examples 10. In each photograph, the brightest white portions are acrylic emulsion resin particles, and the least bright black portions are phthalocyanine blue pigment particles.

### DESCRIPTION OF NUMERALS

In Fig. 2, 1 is an acrylic emulsion resin particle, and 2 is a phthalocyanine blue pigment particle.

### BEST MODE FOR CARRYING OUT THE INVENTION

The following Production Examples, Examples and Comparative Examples are provided to illustrate the present invention in further detail, and are not intended to limit the scope of the invention. Hereinafter, parts and percentages are by weight, and coating thicknesses are on a cured basis.

The solids contents by weight and viscosities of deposited coatings in the Examples and Comparative Examples were determined as follows.

Solids content of deposited coating one minute after application: An aqueous coating composition was applied to a tinplate degreased with isopropanol, and one minute after application, about 2 g of the deposited wet coating was scraped off the tinplate, and placed in an aluminum foil cup with a diameter of about 8 cm to determine the solids content (%). The solids content was calculated from the weight of the wet coating, and the weight of the coating obtained by drying the wet coating at 110°C for 1 hour.

Viscosity of deposited coating one minute after application: An aqueous coating composition was applied to a tinplate degreased with isopropanol, and allowed to stand for 1 minute. About 15 g of the deposited wet coating was then scraped off the tinplate, and its viscosity at 20°C and a shear rate of 0.1 sec⁻¹ was measured using a viscoelastometer (tradename "Rheostress RS-150", product of HAAKE).

Viscosity of deposited coating when it has a solids content of 40%: An aqueous coating composition was applied to a tinplate degreased with isopropanol, and allowed to stand for one, two, or ten minutes. About 15 g of the deposited wet coating was then scraped off the tinplate, and its viscosity at 20°C and a shear rate of 0.1 sec⁻¹ was measured using a viscoelastometer (tradename "Rheostress RS-150", product of HAAKE). Thereafter, the solids contents and viscosities at a shear rate of 0.1 sec⁻¹ of the deposited coating after being allowed to stand for the above time periods were plotted on the X and Y axes, respectively, to draw a graph using a function obtained by the least squares method. The viscosity of a deposited coating having a solids content of 40 wt.% was read from the graph.

### Production Example 1 Production of hydroxy- and carboxy-containing water-soluble resin (A)

Thirty-five parts of propylene glycol monopropyl ether was placed into a flask and heated to 85°C, and a mixture of 30 parts of methyl methacrylate, 20 parts of 2-ethylhexyl acrylate, 29 parts of n-butyl acrylate, 15 parts of hydroxyethyl acrylate, 6 parts of acrylic acid, 15 parts of propylene glycol monopropyl ether, and 2.3 parts of 2,2'-azobis(2,4-dimethylvaleronitrile) was added dropwise to the flask over a period of 4 hours. After completion of the addition, the resulting mixture was aged for 1 hour. Subsequently, a mixture of 10 parts of propylene glycol monopropyl ether and 1 part of 2,2'-azobis(2,4-dimethylvaleronitrile) was further added dropwise to the flask over a period of 1 hour. After completion of the addition, aging was performed for 1 hour. The aged mixture was neutralized with 7.4 parts of diethanolamine, to thereby obtain a 55% solution of water-soluble acrylic resin (A-1) having a weight average molecular weight of 58,000, hydroxy value of 72 mg KOH/g, and acid value of 47 mg KOH/g.

### Production Example 2 Production of acrylic emulsion resin (D1)

Seventeen parts of methyl methacrylate, 80 parts of n-butyl acrylate, 3 parts of allyl methacrylate, 1.2 parts of 60% ammonium polyoxyethylene alkylbenzene sulfonate (tradename "Newcol 562SF", product of Nippon Nyukazai Co., Ltd., surfactant), and 94.3 parts of deionized water were mixed to obtain emulsion a. Separately, 15.4 parts of methyl methacrylate, 2.9 parts of n-butyl acrylate, 5.9 parts of hydroxyethyl acrylate, 5.1 parts of methacrylic acid, 0.52 parts of 60% "Newcol 562SF", and 39 parts of deionized water were mixed to obtain emulsion b.

Deionized water (144.5 parts) and 60% "Newcol 562SF" (1.2 parts) were added to a flask, mixed together by stirring under a nitrogen stream, and heated to 80°C. Thereafter, 1% of emulsion a and 5.2 parts of 3% aqueous ammonium persulfate solution were added, and the resulting mixture was maintained at 80°C for 15 minutes. The remainder of emulsion a was added dropwise over a period of 3 hours, and aging was performed for 1 hour. Emulsion b was then added dropwise over 2 hours, followed by aging for 1 hour. The aged mixture was cooled to 30°C while gradually adding 89 parts of 1.5% aqueous diethylaminoethanol solution to the flask, to thereby obtain an internally crosslinked acrylic emulsion resin (D1-1) having a mean particle diameter of 100 nm, hydroxy value of 22.1 mg KOH/g, acid value of 30.7 mg KOH/g, and solids content of 25.2%.

### Production Example 3 Production of aluminum flake dispersion

Forty parts of propylene glycol monopropyl ether and 15 parts, on an aluminum solids basis, of "Alpaste 7679NS" (tradename, product of Toyo Aluminum K.K., a mixed paste of non-leafing aluminum flakes, dispersant (oleic acid), and mineral spirit) were mixed together by stirring, to obtain aluminum flake dispersion (i).

### Production Example 4 Production of phthalocyanine blue pigment paste

In a 225 ml glass vial were mixed 16.7 parts of phthalocyanine blue pigment (tradename "CYANINE BLUE G-314", product of Sanyo Color Works, Ltd.), 16.7 parts, on a solids weight basis, of the solution of water-soluble acrylic resin (A-1) obtained in Production Example 1, and 80.8 parts of deionized water. Further, 130 g of glass beads with a diameter of 1 mm were added as a dispersion medium, followed by dispersion for 1 hour using a paint shaker. The glass beads were then removed to obtain phthalocyanine blue pigment paste (ii).

### Example 1 Production of thermosetting aqueous metallic coating composition

Fifty parts, on a solids basis, of the solution of water-soluble acrylic resin (A-1) obtained in Production Example 1, 10 parts, on a solids basis, of internally crosslinked acrylic emulsion resin (D1-1) obtained in Production Example 2, 30 parts, on a solids basis, of melamine resin (tradename "Cymel 325", product of Mitsui Cytec, Ltd.), and 10 parts, on a solids basis, of urethane emulsion resin (tradename "U-COAT UX8100", product of Sanyo Chemical Industries, Ltd.) were mixed together. Further, 15 parts, on a solids basis, of aluminum flake dispersion (i) obtained in Production Example 3 was admixed.

The resulting mixture was then diluted with deionized water to a solids content of 20% to obtain thermosetting aqueous silver metallic coating composition WM-1. The coating composition had a viscosity of 220 mPa·s at 20°C and a shear rate of 1 sec⁻¹, and 120 mPa·s at 20°C and a shear rate of 100 sec⁻¹.

### Example 2 Production of thermosetting aqueous metallic coating composition

Twenty parts, on a solids basis, of the solution of water-soluble acrylic resin (A-1) obtained in Production Example 1, 10 parts, on a solids basis, of internally crosslinked acrylic emulsion resin (D1-1) obtained in Production Example 2, 30 parts, on a solids basis, of melamine resin (tradename "Cymel 325", product of Mitsui Cytec, Ltd.), and 10 parts, on a solids basis, of urethane emulsion resin (tradename "U-COAT UX8100", Sanyo Chemical Industries, Ltd.) were mixed together. Further, 60 parts, on a solids basis, of phthalocyanine blue pigment paste (ii) obtained in Production Example 4 and 21 parts of blue interference-color mica powder (tradename "IRIODIN ULTRA 7225RII", product of Merck & Co., Inc.) were admixed.

The resulting mixture was diluted with deionized water to a solids content of 20% to obtain thermosetting aqueous pearl metallic coating composition WB-1. The coating composition had a viscosity of 290 mPa·s at 20°C and a shear rate of 1 sec⁻¹, and 150 mPa·s at 20°C and a shear rate of 100 sec⁻¹.

### Comparative Example 1 Production of thermosetting aqueous metallic coating composition

Fifty parts, on a solids basis, of the solution of water-soluble acrylic resin (A-1) obtained in Production Example 1, 40 parts, on a solids basis, of internally crosslinked acrylic emulsion resin (D1-1) obtained in Production Example 2, 30 parts, on a solids basis, of melamine resin (tradename "Cymel 325", product of Mitsui Cytec, Ltd.), and 10 parts, on a solids basis, of urethane emulsion resin (tradename "U-COAT UX8100", Sanyo Chemical Industries, Ltd.) were mixed together. Further, 15 parts, on a solids basis, of aluminum flake dispersion (i) obtained in Production Example 3 was admixed.

The resulting mixture was then diluted with deionized water to a solids content of 20%, to thereby obtain thermosetting aqueous silver metallic coating composition WM-2. The coating composition had a viscosity of 240 mPa·s at 20°C and a shear rate of 1 sec⁻¹, and 110 mPa·s at 20°C and a shear rate of 100 sec⁻¹.

### Comparative Example 2 Production of thermosetting aqueous metallic coating composition

Forty parts, on a solids basis, of internally crosslinked acrylic emulsion resin (D1-1) obtained in Production Example 2, and 30 parts, on a solids basis, of melamine resin (tradename "Cymel 325", product of Mitsui Cytec, Ltd.) were mixed together. Further, 60 parts, on a solids basis, of phthalocyanine blue pigment paste (ii) obtained in Production Example 4, and 21 parts of blue interference color mica powder (tradename "IRIODIN ULTRA7225RII", product of Merck & Co., Inc.) were admixed.

The resulting mixture was diluted with deionized water to a solids content of 23%, to thereby obtain comparative thermosetting aqueous pearl metallic coating composition WB-2. The coating composition had a viscosity of 3,200 mPa·s at 20°C and a shear rate of 1 sec⁻¹, and 390 mPa·s at 20°C and a shear rate of 100 sec⁻¹.

### Comparative Example 3 Production of thermosetting aqueous metallic coating composition

Ten parts, on a solids basis, of the solution of water-soluble acrylic resin (A-1) obtained in Production Example 1, 40 parts, on a solids basis, of internally crosslinked acrylic emulsion resin (D1-1) obtained in Production Example 2, 30 parts, on a solids basis, of melamine resin (tradename "Cymel 325", product of Mitsui Cytec, Ltd.), and 10 parts, on a solids basis, of urethane emulsion resin (tradename "U-COAT UX8100", Sanyo Chemical Industries, Ltd.) were mixed together. Further, 20 parts, on a solids basis, of phthalocyanine blue pigment paste (ii) obtained in Production Example 4, and 7 parts of blue interference color mica powder (tradename "IRIODIN ULTRA 7225RII", product of Merck & Co., Inc.) were admixed.

The resulting mixture was diluted with deionized water to a solids content of 20% to thereby obtain comparative thermosetting aqueous pearl metallic coating composition WB-3. The coating composition had a viscosity of 2,900 mPa·s at 20°C and a shear rate of 1 sec⁻¹, and 360 mPa·s at 20°C and a shear rate of 100 sec⁻¹.

### Example 3 Formation of coating film by two-coat one-bake method

(1) A cationic electrodeposition coating composition (tradename "ELECRON GT-10", product of Kansai Paint Co., Ltd.) was applied to a zinc phosphate-treated cold-rolled dull steel sheet to a coating thickness of 25 µm, and cured by heating at 170°C for 30 minutes. Thereafter, an acrylic resin/melamine resin-type organic solvent-based intercoating composition (tradename "TP-65", product of Kansai Paint Co., Ltd.) was applied by air spraying to a coating thickness of 30 µm, and cured by heating at 140°C for 30 minutes, to thereby obtain a substrate.
(2) Thermosetting aqueous silver metallic coating composition WM-1 obtained in Example 1 was applied to the substrate to a coating thickness of 5 µm by air spraying, allowed to stand for 2 minutes, and preheated at 80°C for 5 minutes. Subsequently, an acrylic resin/melamine resin-type organic solvent-based clear coating composition (tradename "MAGICRON TC-71", product of Kansai Paint Co., Ltd.) was applied to a coating thickness of 35 µm by air spraying. The resulting two coatings were simultaneously cured by heating at 140°C for 30 minutes to obtain a coated sheet.

During application of thermosetting aqueous coating composition WM-1, a tinplate degreased with isopropanol was placed beside the substrate, to prepare a coating consisting only of coating composition WM-1. The deposited coating on the tinplate one minute after application had a solids content of 35.3%, and a viscosity of 6,200 mPa·s at 20°C and a shear rate of 0.1 sec⁻¹. When the deposited coating of coating composition WM-1 had a solids content of 40%, it had a viscosity of 7,800 mPa·s at 20°C and a shear rate of 0.1 sec⁻¹.

### Comparative Example 4 Formation of coating film by two-coat one-bake method

A coated sheet was obtained in the same manner as in Example 3 except that thermosetting aqueous silver metallic coating composition WM-1 was applied to a coating thickness of 15 µm. A tinplate was also coated by following the procedure in Example 3. The deposited coating of coating composition WM-1 on the tinplate one minute after application had a solids content of 24.2%, and a viscosity of 920 mPa·s at 20°C and a shear rate of 0.1 sec⁻¹. When the deposited coating of coating composition WM-1 had a solids content of 40%, it had a viscosity of 7,900 mPa·s at 20°C and a shear rate of 0.1 sec⁻¹.

### Comparative Example 5 Formation of coating film by two-coat one-bake method

A coated sheet was obtained in the same manner as in Example 3 except that thermosetting aqueous silver metallic coating composition WM-2 was used in place of thermosetting aqueous silver metallic coating composition WM-1. A tinplate was also coated by following the procedure in Example 3. The deposited coating of coating composition WM-2 on the tinplate one minute after application had a solids content of 34.8%, and a viscosity of 80,000 mPa·s at 20°C and a shear rate of 0.1 sec⁻¹. When the deposited coating of coating composition WM-2 had a solids content of 40%, it had a viscosity of 82,000 mPa·s at 20°C and a shear rate of 0.1 sec⁻¹.

### Comparative Example 6 Formation of coating film by two-coat one-bake method

A coated sheet was obtained in the same manner as in Example 3 except that thermosetting aqueous silver metallic coating composition WM-2 was used in place of thermosetting aqueous silver metallic coating composition WM-1, and was applied to a coating thickness of 15 µm. A tinplate was also coated by following the procedure in Example 3. The deposited coating of coating composition WM-2 on the tinplate one minute after application had a solids content of 24.0%, and a viscosity of 15,000 mPa·s at 20°C and a shear rate of 0.1 sec⁻¹ . When the coating of coating composition WM-2 deposited on the tinplate had a solids content of 40%, it had a viscosity of 82,500 mPa·s at 20°C and a shear rate of 0.1 sec⁻¹.

### Test result 1

The IV value, FF value and film smoothness of the coated sheets obtained in Example 3 and Comparative Examples 4 to 6 were evaluated. The test and evaluation methods are as follows.

IV value and FF value: The IV value and FF value were measured using a metallic texture-measuring apparatus (tradename "ALCOPE LMR100", product of Fuji Industry Co., Ltd.). The IV value indicates the brilliance of a coating surface viewed from the front (highlight), and the higher the IV value, the better the luster. The FF value indicates the difference in whiteness (brightness) produced by a luster pigment between the coating surface being viewed from the front direction (highlight) and from an oblique angle (shade). The greater the difference, the better the flip-flop property.

Coating film smoothness: The coating surface was observed by the naked eye to evaluate the smoothness and the presence or absence of sagging.

Table 1 shows the test results and the measured viscosities of deposited coatings.

### [Table 1]

**Table 1**

| | Ex. 3 | Comp.Ex.4 | Comp.Ex.5 | Comp.Ex.5 |
|---|---|---|---|---|
| Name of thermosetting aqueous coating composition | WM-1 | WM-1 | WM-2 | WM-2 |
| Coating thickness (µm) | 5 | 15 | 5 | 15 |
| Solids content (%) of deposited coating one minute after application | 35.3 | 24.2 | 34.8 | 24.0 |
| Viscosity (mPa·s) of deposited coating one minute after application | 6,200 | 920 | 80,000 | 15,000 |
| Viscosity (mPa·s) of deposited coating with solids content of 40% | 7,800 | 7,900 | 82,000 | 82,500 |
| IV value | 285 | 129 | 187 | 165 |
| FF value | 1.7 | 1.1 | 1.6 | 1.4 |
| Coating film smoothness | Good | Sagging observed | Poor | Good |

The test results shown in Table 1 reveal that when thermosetting aqueous silver metallic coating composition WM-1 is applied to a coating thickness of 15 µm, the deposited coating one minute after application has a low viscosity, causing sagging of the coating composition (Comparative Example 4); but when it is applied to a coating thickness of 5 µm, the resulting coating film shows a high IV value and good smoothness (Example 3).

Further, it is revealed that when thermosetting aqueous silver metallic coating composition WM-2 is applied to a coating thickness of 5 µm, the deposited coating has too high a viscosity, resulting in a low IV value due to poor orientation of the luster pigment, and has poor smoothness (Comparative Example 5); and when coating composition WM-2 is applied to a thickness of 15 µm, the resulting coating film has good smoothness but do not have a high IV value due to poor orientation of the luster pigment.

### Example 4 Formation of coating film by three-coat one-bake method

(1) A cationic electrodeposition coating composition (tradename "ELECRON GT-10", product of Kansai Paint Co., Ltd.) was applied to a zinc phosphate-treated cold-rolled dull steel sheet to a coating thickness of 25 µm, and cured by heating at 170°C for 30 minutes, to thereby obtain a substrate.
(2) An acrylic resin/melamine resin-type aqueous intercoating composition (tradename "WP-300T", product of Kansai Paint Co., Ltd.) was applied to the above substrate by air spraying to a coating thickness of 30 µm, allowed to stand for 2 minutes, and preheated at 80°C for 5 minutes. Thermosetting aqueous silver metallic coating composition WM-1 obtained in Example 1 was applied to a coating thickness of 5 µm over the above-obtained uncured intercoat by air spraying, allowed to stand for 2 minutes, and preheated at 80°C for 5 minutes. Subsequently, an acrylic resin/melamine resin-type organic solvent-based clear coating composition (tradename "MAGICRON TC-71", product of Kansai Paint Co., Ltd.) was applied to a coating thickness of 35 µm by air spraying and allowed to stand for 7 minutes. The resulting three coatings were then simultaneously cured by heating at 140°C for 30 minutes, to thereby obtain a coated sheet.

During application of thermosetting aqueous coating composition WM-1, a tinplate degreased with isopropanol was placed beside the substrate, to prepare a coating consisting only of coating composition WM-1. The deposited coating on the tinplate one minute after application had a solids content of 33.3%, and a viscosity of 5,900 mPa·s at 20°C and a shear rate of 0.1 sec⁻¹. When the deposited coating of coating composition WM-1 had a solids content of 40%, it had a viscosity of 7,300 mPa·s at 20°C and a shear rate of 0.1 sec⁻¹ .

### Comparative Example 7 Formation of coating film by three-coat one-bake method

A coated sheet was obtained in the same manner as in Example 4 except that thermosetting aqueous silver metallic coating composition WM-1 was applied to a coating thickness of 15 µm. A tinplate was also coated by following the procedure in Example 4. The deposited coating of coating composition WM-1 on the tinplate one minute after application had a solids content of 23.9%, and a viscosity of 900 mPa·s at 20°C and a shear rate of 0.1 sec⁻¹. When the deposited coating of coating composition WM-1 had a solids content of 40%, it had a viscosity of 7,300 mPa·s at 20°C and a shear rate of 0.1 sec⁻¹.

### Comparative Example 8 Formation of coating film by three-coat one-bake method

A coated sheet was obtained in the same manner as in Example 4 except that thermosetting aqueous silver metallic coating composition WM-2 was used in place of thermosetting aqueous silver metallic coating composition WM-1. A tinplate was also coated by following the procedure in Example 4. The deposited coating of coating composition WM-2 on the tinplate one minute after application had a solids content of 33.2%, and a viscosity of 78,500 mPa·s at 20°C and a shear rate of 0.1 sec⁻¹. When the deposited coating of coating composition WM-2 had a solids content of 40%, it had a viscosity of 79,000 mPa·s at 20°C and a shear rate of 0.1 sec⁻¹.

### Comparative Example 9 Formation of coating film by three-coat one-bake method

A coated sheet was obtained in the same manner as in Example 4 except that thermosetting aqueous silver metallic coating composition WM-2 was used in place of thermosetting aqueous silver-metallic coating composition WM-1, and was applied to a coating thickness of 15 µm. A tinplate was also coated by following the procedure in Example 4. The deposited coating of coating composition WM-2 on the tinplate one minute after application had a solids content of 24.5%, and a viscosity of 14,800 mPa·s at 20°C and a shear rate of 0.1 sec⁻¹. When the deposited coating of coating composition WM-2 on the tinplate had a solids content of 40%, it had a viscosity of 80,500 mPa·s at 20°C and a shear rate of 0.1 sec⁻¹.

### Test result 2

The IV value, FF value and coating film smoothness of the coated sheets obtained in Example 4 and Comparative Examples 7 to 9 were evaluated by the methods described above.

Table 1 shows the test results and measured viscosities of deposited coatings.

### [Table 2]

**Table 2**

| | Ex. 4 | Comp.Ex.7 | Comp.Ex.8 | Comp.Ex.9 |
|---|---|---|---|---|
| Name of thermosetting aqueous coating composition | WM-1 | WM-1 | WM-2 | WM-2 |
| Coating thickness (µm) | 5 | 15 | 5 | 15 |
| Solids content (%) of deposited coating one minute after application | 33.0 | 23.9 | 33.2 | 24.5 |
| Viscosity (mPa·s) of deposited coating one minute after application | 5,900 | 900 | 78,500 | 14,800 |
| Viscosity (mPa·s) of deposited coating with solids content of 40% | 7,300 | 7,300 | 79,000 | 80,500 |
| IV value | 240 | * | 190 | * |
| FF value | 1.7 | * | 1.6 | * |
| Coating film smoothness | Good | Marked sagging observed | Good | Sagging observed |

| | | | | |
|---|---|---|---|---|
| In the table, * means "not measurable due to sagging". | | | | |

The test results shown in Table 2 reveal that when thermosetting aqueous silver metallic coating composition WM-1 is applied to a thickness of 15 µm, since the deposited coating of coating composition WM-1 has a low viscosity one minute after application and since the coating composition WM-1 is applied to a wet intercoat, the resulting coating film has marked sagging (Comparative Example 7). It is also revealed that when coating composition WM-1 is applied to a thickness of 5 µm, the resulting coating film has a high IV value and good smoothness (Example 4). Further, when thermosetting aqueous silver metallic coating composition WM-2 is applied to a thickness of 5 µm, the resulting coating film has a relatively high IV value and relatively good smoothness. This is presumably because, since the metallic coating composition is applied to a wet intercoat, the resulting intercoat-metallic coat composite coating has a suitably low viscosity (Comparative Example 8). However, the IV value in Comparative Example 8 is inferior to that in Example 4. Furthermore, when coating composition WM-2 is applied to a coating thickness of 15 µm, the coating film has sagging (Comparative Example 9). This is presumably because, since the intercoat before application of coating composition WM-2 is wet, the intercoat-metallic coat composite coating has too low a viscosity, causing sagging.

The above results show that the thermosetting aqueous coating composition and film-forming method of the present invention are also useful in three-coat one-bake methods in which an intercoating composition, thermosetting aqueous coating composition and clear coating composition are simultaneously cured.

### Example 5 Formation of coating film by two-coat one-bake method

A coated sheet was obtained in the same manner as in Example 3 except that thermosetting aqueous pearl metallic coating composition WB-1 was used in place of thermosetting aqueous silver metallic coating composition WM-1. During application of thermosetting aqueous coating composition WB-1, a tinplate was placed beside the substrate, to prepare a coating consisting only of coating composition WB-1. When the coating of coating composition WB-1 deposited on the tinplate had a solids content of 40%, it had a viscosity of 7,000 mPa·s at 20°C and a shear rate of 0.1 sec⁻¹.

### Comparative Example 10 Formation of coating film by two-coat one-bake method

A coated sheet was obtained in the same manner as in Example 3 except that thermosetting aqueous pearl metallic coating composition WB-2 was used in place of thermosetting aqueous silver metallic coating composition WM-1. During application of thermosetting aqueous coating composition WB-2, a tinplate was placed beside the substrate, to prepare a coating consisting only of coating composition WB-2. When the coating of coating composition WB-2 deposited on the tinplate had a solids content of 40%, it had a viscosity of 72,000 mPa·s at 20°C and a shear rate of 0.1 sec⁻¹.

### Comparative Example 11 Formation of coating film by two-coat one-bake method

A coated sheet was obtained in the same manner as in Example 3 except that thermosetting aqueous pearl metallic coating composition WB-3 was used in place of thermosetting aqueous silver metallic coating composition WM-1, and was applied to a coating thickness of 15 µm. During application of thermosetting aqueous coating composition WB-3, a tinplate was placed beside the substrate, to prepare a coating consisting only of coating composition WB-3. When the coating of coating composition WB-3 deposited on the tinplate had a solids content of 40%, it had a viscosity of 80,000 mPa·s at 20°C and a shear rate of 0.1 sec⁻¹.

### Test result 3

The interference color and color properties of the coated sheets obtained in Example 5 and Comparative Examples 10 and 11 were evaluated. The test and evaluation methods are as follows.

Interference color: The interference color of the coating surface viewed from the front (highlight) was classified by the naked eye into one of three categories: extremely strong, strong, and weak. A stronger interference color is obtained when the interference-color mica pigment disperses better in the coating film and more of the mica pigment particles are oriented parallel to the coating surface.

Color properties were determined from the saturation (C value) in the shade and by naked eye evaluation.

Saturation (C value) in the shade: The saturation (C value) at an acceptance angle of 75° was measured using a colorimeter (tradename "MA68II", product of X-Lite). A higher saturation is obtained when the coloring pigment disperses better in the coating film. The higher the C value, the better the color properties.

Naked eye evaluation of color properties: The coating film was checked for turbidity by the naked eye. When the pigment disperses well in the coating film, the coating film is free of turbidity and has good color properties.

Table 3 shows the test results and measured viscosities of deposited coatings.

### [Table 3]

**Table 3**

| | | Ex.5 | Comp.Ex.10 | Comp.Ex.11 |
|---|---|---|---|---|
| Name of thermosetting aqueous coating composition | | WB-1 | WB-2 | WB-3 |
| Coating thickness (µm) | | 5 | 5 | 15 |
| Viscosity (mPa·s) of deposited coating with solids content of 40% | | 7,000 | 72,000 | 80,000 |
| Interference color | | Extremely strong | Strong | Weak |
| Color properties | Saturation in the shade | 23.0 | 8.8 | 10.6 |
| | Naked eye evaluation | Good | Turbidity observed | Turbidity observed |

As shown in Table 3, the coating film of Example 5 has a strong interference color, high saturation in the shade, and no turbidity. In contrast, the coating films of Comparative Examples 10 and 11 have an insufficient interference color and low saturation in the shade, and are turbid.

Further, the dispersion of mica pigment in the coating film was microscopically observed.

Fig. 1 is a set of photographs of the coating surfaces obtained by two-coat one-bake methods in Example 5, Comparative Example 10, and Comparative Example 11, the photographs being taken through a reflecting optical microscope at a magnification of 100 times. The photographs in Fig. 1 show, from the left, the coating surface obtained in Example 5, that obtained in Comparative Example 10, and that obtained in Comparative Example 11. In each photograph, the brightest white particles are mica pigment particles.

Fig. 1 shows that the mica pigment disperses better in the coating film of Example 5 than in the coating films of Comparative Examples 10 and 11. Presumably, this is the cause of the coating film of Example 5 having a strong interference color and good color properties.

Fig. 2 is a set of photographs of thin pieces obtained by cutting, in the direction vertical to the coating surface, the coating films obtained by two-coat one-bake methods in Example 5 and Comparative Example 10, the photographs being taken through a transmission electron microscope (product of Carl Zeiss, Model LEO 912AB) at a magnification of 50,000 times. The thin pieces were obtained as follows: the coating film was embedded in an epoxy resin and stained with ruthenium tetroxide vapor, and a piece with a thickness of 80 to 100 nm was cut from the coating film.

In Fig. 2, the left photograph shows the coating film of Example 5 and the right photograph shows that of Comparative Examples 10. In each photograph, the brightest white portions are acrylic emulsion resin particles, and the least bright black portions are phthalocyanine blue pigment particles. In the left photograph in Fig. 2, 1 and 2 indicate an acrylic emulsion resin particle and a phthalocyanine blue pigment particle, respectively. The acrylic emulsion resin particle 1 and phthalocyanine blue pigment particles 2 are present in a transparent continuous phase derived from the water-soluble acrylic resin.

Fig. 2 shows that the coloring pigment is more uniformly dispersed in the coating film of Example 5 than in the coating film of Comparative Example 10. Presumably, this is the cause of the coating film of Example 5 having a strong interference color and good color properties.

## Claims

1. A thermosetting aqueous coating composition comprising:
(A) 100 parts by weight of a hydroxy- and carboxy-containing water-soluble resin having a weight average molecular weight of 500 to 200,000, a hydroxy value of 1 to 200 mg KOH/g, and an acid value of 10 to 100 mg KOH/g, and
(B) 10 to 100 parts by weight of a luster pigment; the coating composition being applied so as to form a film with a thickness of 3,000 to 8,000 nm when cured; and the coating composition, when formed into a deposited coating with a solids content of 40 wt.%, having a viscosity of 4 x 10² to 1 x 10⁴ mPa·s as measured at 20°C and a shear rate of 0.1 sec⁻¹.

2. A thermosetting aqueous coating composition according to claim 1, further comprising (C) 5 to 70 parts by weight of a crosslinking agent.

3. A thermosetting aqueous coating composition according to claim 1, further comprising (D) an aqueous emulsion resin.

4. A thermosetting aqueous coating composition according to claim 3, wherein the aqueous emulsion resin (D) is an acrylic emulsion resin.

5. A thermosetting aqueous coating composition according to claim 1, further comprising (E) a coloring pigment.

6. A method for forming a coating film, the method comprising applying a thermosetting aqueous coating composition according to claim 1 to a substrate so as to form a film with a thickness of 3,000 to 8,000 nm when cured.

7. A method according to claim 6, the method comprising the steps of:
(1) applying a thermosetting aqueous coating composition according to item 1 to a substrate so as to form a film with a thickness of 3,000 to 8,000 nm when cured, thereby forming a basecoat;
(2) applying a clear coating composition to a surface of the uncured basecoat to form a clear coat; and
(3) simultaneously curing the uncured basecoat and uncured clear coat by heating.

8. A method according to claim 6, the method comprising: (1) applying an intercoating composition to a substrate to form an intercoat;
(2) applying a thermosetting aqueous coating composition according to claim 1 to a surface of the uncured intercoat so as to form a film with a thickness of 3,000 to 8,000 nm when cured, thereby forming a basecoat;
(3) applying a clear coating composition to a surface of the uncured basecoat to form a clear coat; and
(4) simultaneously curing the uncured intercoat, uncured basecoat, and uncured clear coat by heating.

9. An article coated by a method according to claim 6.
